# EUROPÄISCHE PATENTSCHRIFT

(11) **EP 4 234 418 B1**
(45) Veröffentlichungstag und Bekanntmachung des Hinweises auf die Patenterteilung: **28.01.2026**
(21) Anmeldenummer: 22211901.8
(22) Anmeldetag: 07.12.2022
(51) Int. Cl.: B65B 9/04, B65B 57/00, B65B 59/00, B65B 59/02, G05B 19/418

(54) **VERPACKUNGSMASCHINE ODER VERPACKUNGSLINIE MIT DYNAMISCHEM REZEPTWECHSEL**
PACKAGING MACHINE OR PACKAGING LINE WITH DYNAMIC RECIPE CHANGE
MACHINE D'EMBALLAGE OU LIGNE D'EMBALLAGE À CHANGEMENT DYNAMIQUE DE PRESCRIPTION

(30) Priorität: 01.02.2022 DE 102022102342
(43) Veröffentlichungstag der Anmeldung: 30.08.2023
(73) Patentinhaber: MULTIVAC Sepp Haggenmüller SE & Co. KG, 87787 Wolfertschwenden (DE)
(72) Erfinder: BOTZENHARDT, Claus, 87439 Kempten (DE); BUCHENBERG, Wolfgang, 87487 Wiggensbach (DE); JOCHEM, Martin, 87509 Immenstadt im Allgäu (DE); MERK, Stefan, 87787 Wolfertschwenden (DE); PFISTER, Marcus, 87730 Bad Grönenbach (DE); SIMON, Thomas, 89358 Kammeltal (DE); WÖLFLE, Johann, 87634 Obergünzburg (DE); LENZ, Peter, 87471 Durach (DE)
(74) Vertreter: Grünecker Patent- und Rechtsanwälte PartG mbB

(56) Entgegenhaltungen:
- EP-A1- 1 225 491
- DE-A1- 102017 125 077
- DE-B3- 102012 221 458
- DE-U1- 202016 000 302
- US-A1- 2020 272 224

## Beschreibung

Die vorliegende Erfindung betrifft eine Vorrichtung für einen Verpackungsprozess gemäß dem Anspruch 1. Ferner bezieht sich die Erfindung auf ein Verfahren zum Durchführen von einem Rezeptwechsel an einer intermittierend arbeitenden Verpackungsmaschine bzw. an einer intermittierend arbeitenden Verpackungslinie gemäß dem Verfahrensanspruch 10.

An einer Verpackungsmaschine und insbesondere an einer aus mehreren (Verpackungs-) Maschinen zusammengestellten Verpackungslinie werden Bediener bei der Umstellung von Artikeln, d.h. bei einem Rezeptwechsel, der beispielsweise einen Format- und/oder einen Produktwechsel betreffen kann, mit vielfältigen Aufgaben, beispielsweise mit zahlreichen dafür benötigten Prozessparameterneueinstellungen und/oder Werkzeugumrüstaktionen, konfrontiert.

Herkömmlicherweise wird an der Verpackungslinie oder an der Verpackungsmaschine der aktuell darauf hergestellte Verpackungstyp für einen Rezeptwechsel komplett leergefahren und anschließend werden sämtliche benötigten Umrüstaktionen vom Bedienpersonal auf einmal ausgeübt, um nach Durchführung der Komplettumrüstung das neue Verpackungsrezept, beispielsweise einen anderen Verpackungstypen, herzustellen. Durch diese Herangehensweise, bei welcher die Verpackungsmaschine bzw. -linie erst mal vollständig leergefahren und dann komplett durch einen einmaligen, tendenziell umfangreichen Umrüstvorgang umgestellt bzw. neueingestellt wird, wird allerdings viel Rohmaterial (Folie, Etiketten, usw.) und Zeit in Anspruch genommen. Außerdem kommt es dabei erfahrungsgemäß zu hohen Stillstandzeiten der Verpackungslinie bzw. Verpackungsmaschine, wodurch die Verpackungsherstellungskosten zunehmen.

EP 3 133 022 B1 offenbart ein vollständiges Leerfahren der Verpackungslinie bzw. der Verpackungsmaschine, um einen Rezeptwechsel durchzuführen. Damit einher geht herkömmlicherweise ein sowohl arbeits- als auch zeitintensiver, insbesondere vom Fachwissen des Bedieners abhängiger komplexer Umrüstakt, da auf einmal alle Stationen der Verpackungslinie oder Verpackungsmaschine für das neue Rezept eingestellt und/oder umgebaut werden müssen. Dies stellt für das Bedienpersonal eine große Herausforderung dar.

DE 10 2012 221 458 B3 offenbart eine Verpackungsmaschine mit mehreren Antriebseinrichtungen, welche sich für eine Formatverstellung nacheinander verstellen lassen. Dafür findet die jeweilige Formatverstellung an den jeweiligen Antriebseinrichtungen immer erst dann statt, wenn die letzte Komponente eines alten Formats die jeweilige Antriebseinrichtung passiert hat.

DE 10 2017 125 077 A1 offenbart eine Tiefziehverpackungsmaschine mit mehreren Arbeitsstationen, die zur Bearbeitung verschiedener Packungsformate konfiguriert sind. Hinsichtlich der Position des jeweiligen Packungsformats zur dafür voreingestellten Arbeitsstation lassen sich für die jeweiligen Packungsformate ggf. verschiedene Vorschublängenbedarfe ermitteln, worauf basierend sich der Vorschub einer Vorschubeinrichtung zum Transport der Verpackungsfolie ansteuern lässt.

Aufgabe der Erfindung ist es, für das Bedienpersonal an einer Verpackungsmaschine oder an einer Verpackungslinie einen Rezeptwechsel einfacher zu gestalten, wodurch sich außerdem ein erhöhtes Potential zur Steigerung der Wirtschaftlichkeit der Verpackungsmaschine bzw. der Verpackungslinie ergibt.

Diese Aufgabe wird gelöst durch eine Vorrichtung gemäß Anspruch 1 sowie anhand eines Verfahrens gemäß Anspruch 10.

Vorteilhafte Weiterbildungen der Erfindung sind durch die jeweiligen Gegenstände der Unteransprüche gegeben.

Die Erfindung bezieht sich auf eine Vorrichtung für einen Verpackungsprozess, wobei die Vorrichtung in Form einer schrittweise arbeitenden Verpackungsmaschine vorliegt, oder als eine schrittweise arbeitende Verpackungslinie ausgebildet ist, jeweils umfassend mindestens eine erste Arbeitsstation, wenigstens eine von der ersten Arbeitsstation in Produktionsrichtung beabstandet gelagerte zweite Arbeitsstation sowie mindestens eine funktional mit der ersten und der zweiten Arbeitsstation verbundene Steuereinrichtung, die dazu konfiguriert ist, anhand eines ersten Steuerschritts in Reaktion auf einen an der Verpackungsmaschine oder an der Verpackungslinie aktivierten Rezeptwechsel von einem ersten Verpackungsrezept auf ein anderes, zweites Verpackungsrezept zur Fertigung eines in Produktionsrichtung zuerst innerhalb der ersten Arbeitsstation gemäß dem zweiten Verpackungsrezept gebildeten Arbeitstakts mindestens einen dafür an der ersten Arbeitsstation benötigten Prozessparameter automatisch einzustellen und/oder einen Bediener auf mindestens eine Umrüstaktion der ersten Arbeitsstation hinzuweisen, wobei die Steuereinrichtung weiter dazu konfiguriert ist, in Reaktion auf den aktivierten Rezeptwechsel anhand eines zweiten Steuerschritts zur Fertigung des in Produktionsrichtung zuerst innerhalb der zweiten Arbeitsstation gemäß dem zweiten Verpackungsrezept gebildeten Arbeitstakts mindestens einen dafür an der zweiten Arbeitsstation benötigten Prozessparameter automatisch einzustellen und/oder den Bediener auf mindestens eine Umrüstaktion der zweiten Arbeitsstation hinzuweisen.

Erfindungsgemäß ist die Steuereinrichtung dazu ausgebildet, nach dem ersten Steuerschritt den zweiten Steuerschritt erst dann durchzuführen, wenn ein in Produktionsrichtung dem zuerst gemäß dem zweiten Verpackungsrezept gebildeten Arbeitstakt direkt vorangehender, zuletzt gemäß dem ersten Verpackungsrezept innerhalb der ersten Arbeitsstation gebildeter Arbeitstakt von der ersten Arbeitsstation bis in die zweite Arbeitsstation vorgerückt oder darin zumindest teilweise weiterverarbeitet ist.

In anderen Worten wird bei der Erfindung trotz des aktivierten Rezeptwechsels die bis dahin entlang der Verpackungsmaschine oder der Verpackungslinie gemäß dem ersten Verpackungsrezept hergestellte Verpackungscharge, sprich der zum Zeitpunkt der Aktivierung des gewünschten Rezeptwechsels innerhalb der ersten Arbeitsstation befindliche Arbeitstakt sowie die zu diesem in Produktionsrichtung entlang der Verpackungsmaschine oder der Verpackungslinie vorausgehenden Arbeitstakte noch vollständig zu Ende produziert. Dabei können die jeweiligen Arbeitsstationen der Verpackungsmaschine oder der Verpackungslinie, die für den Rezeptwechsel neueingestellt und/oder umgerüstet werden müssen, schrittweise nacheinander, also immer erst dann, wenn der zum Zeitpunkt der Aktivierung des gewünschten Rezeptwechsels innerhalb der vorausgehenden ersten Arbeitsstation befindliche Arbeitstakt zu einem späteren Zeitpunkt in ihnen ankommt oder zumindest teilweise in ihnen fertiggestellt ist, auf das zweite Verpackungsrezept umgestellt werden.

Die Umstellung der einzelnen Arbeitsstationen vom Betrieb gemäß dem ersten Verpackungsrezept auf den Betrieb gemäß dem zweiten Verpackungsrezept findet somit von Arbeitsstation zu Arbeitsstation intervallweise nacheinander statt, wobei der Zeitpunkt, zu dem an den jeweiligen in Produktionsrichtung hintereinander positionierten Arbeitsstationen Umstell- und/oder Umrüstaktionen aktivierbar sind, von der Anzahl dazwischenliegender Arbeitstakte abhängig ist. Demzufolge kommt viel weniger Materialausschuss zustande bzw. ist auf ein Minimum reduzierbar, weil der Rezeptwechsel sozusagen nahtlos stattfindet.

Bei der Erfindung lässt sich der Rezeptwechsel wirtschaftlich und für den Bediener in überschaubarem Maße in den laufenden Verpackungsprozess integrieren. Im Gegensatz zum Stand der Technik wird bei der Erfindung nicht mehr die Verpackungsmaschine bzw. -linie komplett leergefahren und ein längerer Maschinen- oder Linienstopp benötigt, um sämtliche Umstellaktionen auf einmal durchzuführen, bevor der Verpackungsprozess für das neue Rezept weitergeht. Vielmehr kommt die Erfindung mit erheblich kürzeren Stillstandzeiten zum Umrüsten der Verpackungslinie oder der Verpackungsmaschine aus, weil die Umstellaktionen, beispielsweise diverse Werkzeugwechsel an jeweiligen Arbeitsstationen und/oder Neuparametereinstellungen, von Arbeitsstation zu Arbeitsstation nach und nach durchgeführt werden, dazwischen allerdings der Verpackungsprozess weiterläuft. So können entlang der Verpackungsmaschine bzw. entlang der Verpackungslinie die daran in Produktionsrichtung nacheinander ausgebildeten Arbeitsstationen eine nach der anderen optimal für das neue Rezept eingerichtet werden. In anderen Worten kann anhand der Erfindung das herkömmliche, für den Rezeptwechsel vom Bediener abverlangte große Umstellprojekt in mehrere einzelne, kleinere, d.h. einfacher zu bewerkstelligende Umstellprojekte aufgeteilt werden.

Da bei der Erfindung die jeweiligen Arbeitsstationen immer erst dann für das neue Verpackungsrezept umgerüstet und/oder mit neuen Prozessparametern belegt werden, wenn ein diesbezüglicher vorgesehener Arbeitstakt erstmalig, unmittelbar an der jeweiligen Arbeitsstation bevorsteht, lässt sich der Verbrauch von Rohmaterial für den Rezeptwechsel stark reduzieren.

Ein Rezeptwechsel im Sinne der Erfindung bedeutet die Umstellung zwischen verschiedenen Verpackungsrezepten bzw. Rezeptkreationen, insbesondere eine formatspezifische Umstellung, beispielsweise eine Umstellung von 2x2 auf 3x3 Verpackungen pro Maschinenarbeitstakt, die Umstellung auf einen anderen Verpackungstypen, beispielsweise die Umstellung auf eine andere Tiefziehmuldenform, mindestens eine prozessparameterbasierte Umstellung, vorzugsweise mindestens einen gewünschten Soll-Prozesswert, beispielsweise ein gewünschter Vakuumwert, ein gewünschter Evakuierungs- und/oder Begasungsdruck, eine gewünschte Siegeltemperatur, eine produktbasierte Umstellung, beispielsweise die Umstellung auf ein anderes Lebensmittelprodukt als Verpackungsgut, und/oder mindestens eine materialspezifische Umstellung, z.B. die Umstellung auf einen neuen Folientypen.

Vorstellbar ist es, dass vom Bediener anhand der Steuereinrichtung, insbesondere durch die Steuereinrichtung aus einem mit ihr verbundenen Speicher und/oder einer mit ihr verbundenen Datenbank, beispielsweise aus einer cloudbasierten Datenbank, verschiedene Rezeptkreationen, die jeweils eine Vielzahl der vorangehend genannten Umstellungen enthalten können, abrufbar sind. Der Bediener kann per Tastendruck die verschiedenen Rezeptchargen mittels der Steuereinrichtung aktivieren, wodurch der Rezeptwechsel an der Verpackungsmaschine oder an der Verpackungslinie in Gang gesetzt wird.

Eine Variante sieht vor, dass die Steuereinrichtung dazu ausgebildet ist, den ersten Steuerschritt durchzuführen, wenn der direkt in Produktionsrichtung dem zuerst gemäß dem zweiten Verpackungsrezept herzustellenden Arbeitstakt vorausgehende, zuletzt gemäß dem ersten Verpackungsrezept herzustellende Arbeitstakt in die erste Arbeitsstation vorgerückt oder darin zumindest teilweise weiterverarbeitet ist. Zwischen diesem und dem nachfolgenden Arbeitstakt kann die Steuereinrichtung eine Umstellgrenze definieren, dessen intervallweise Verlagerung in Produktionsrichtung der Verpackungsmaschine oder der Verpackungslinie für einen Bediener visualisierbar ist.

Vorzugsweise weist die Vorrichtung eine Anzeigevorrichtung auf, die insbesondere als Teil der Steuereinrichtung vorliegt, wobei mittels der Anzeigevorrichtung auf Basis des ersten Steuerschritts für den Bediener mindestens eine Handlungsanweisung für die Umrüstaktion der ersten Arbeitsstation und/oder mittels welcher auf Basis des zweiten Steuerschritts für den Bediener mindestens eine Handlungsanweisung für die Umrüstaktion der zweiten Arbeitsstation visualisierbar sind. Bei dieser Handlungsanweisung kann es sich beispielsweise um eine Aufgabenliste zur Umrüstung der jeweiligen Arbeitsstation und/oder um ein Video zum Veranschaulichen benötigter Arbeitsschritte zum Umrüsten der jeweiligen Arbeitsstation handeln. Die Anzeigevorrichtung kann gemäß einer Variante die Umstellgrenze visualisieren.

Vorstellbar ist es, dass die Steuereinrichtung dazu konfiguriert ist, in Reaktion auf den aktivierten Rezeptwechsel einen zu diesem Zeitpunkt innerhalb der ersten Arbeitsstation angekommenen Arbeitstakt, beispielsweise ein Verpackungsformat von 2x2 Verpackungen, als den zuletzt gemäß dem ersten Verpackungsrezept herzustellenden Arbeitstakt zu definieren und dessen intermittierenden Vorschub, insbesondere die Umstellgrenze zwischen ihm und dem ersten gemäß dem zweiten Verpackungsrezept herzustellenden, nachfolgenden Arbeitstakt entlang der Verpackungsmaschine oder entlang der Verpackungslinie zu verfolgen und/oder anhand der Anzeigevorrichtung zu visualisieren. Es kann damit eine den Fortschritt des Rezeptwechsels betreffende Streckenverfolgung zur Verfügung gestellt werden.

Insbesondere ist der Rezeptwechsel für die Verpackungsmaschine oder für die Verpackungslinie mittels der Steuereinrichtung durch eine daran getätigte Eingabe zur Auswahl eines darin hinterlegten Verpackungsrezepts eines bestimmten Verpackungstypen aktivierbar. Eine Variante sieht vor, dass die Steuereinrichtung eine RFID-Lesegerät aufweist, anhand dessen verschiedene, auf diversen RFID-Chips gespeicherte Rezeptkreationen auslesbar sind, wodurch sich ein Rezeptwechsel triggern lässt.

Eine besondere Ausführungsform sieht vor, dass die Vorrichtung mindestens eine funktional mit der Steuereinrichtung verbundene VR-Brille für den Bediener aufweist, mittels welcher mindestens eine Handlungsanweisung für die Umrüstaktion der ersten und/oder der zweiten Arbeitsstation visualisierbar ist. Eine solche für die Verpackungsmaschine oder die Verpackungslinie konfigurierte VR-Brille dient dem Bediener als mitführbares Hilfsmittel, anhand dessen der Bediener mittels eines für die jeweiligen Arbeitsstationen geschaffenen, in Reaktion auf die jeweiligen Steuerschritte einspielbaren, virtuellen Umrüstszenarios instruierbar ist. Die VR-Brille kann dabei als virtueller Umrüstassistent für diverse Umrüst- und/oder Einstellaktionen direkt an den jeweiligen Arbeitsstationen zum Einsatz kommen, ohne dass der Bediener vom Ort der Steuereinrichtung abhängig ist.

Vorzugsweise ist die erste Arbeitsstation als eine Formstation mit mindestens einer Werkzeugkomponente zur Herstellung von (Tiefzieh-) Mulden ausgebildet und/oder die zweite Arbeitsstation als eine Siegelstation mit mindestens einer Werkzeugkomponente zur Herstellung von versiegelten Mulden konfiguriert.

Insbesondere gilt der erste Steuerschritt für die Werkzeugkomponente der Formstation und der zweite Steuerschritt für die Werkzeugkomponente der Siegelstation. Sobald der zweite Steuerschritt für den Rezeptwechsel geschieht, hat der Bediener die Formstation auf Basis des ersten Steuerschritts bereits für den Rezeptwechsel komplett umgebaut und/oder neueingestellt.

Gemäß einer vorteilhaften Ausführungsform weist die Verpackungsmaschine oder die Verpackungslinie mindestens eine Fördereinrichtung auf, die anhand der Steuereinrichtung für einen schrittweisen Transport der innerhalb der ersten Arbeitsstation verarbeiteten Arbeitstakte zu der davon beabstandeten, zweiten Arbeitsstation ansteuerbar ist. Zu dem Zeitpunkt, zu dem eine der Arbeitsstationen für den Rezeptwechsel umgerüstet und/oder neueingestellt wird, kann die Fördereinrichtung deaktiviert sein, wobei deren Betrieb nach Fertigstellung der Umrüstung und/oder Neueinstellung der Arbeitsstation wiederaufgenommen werden kann.

Außerdem bezieht sich die Erfindung auf ein Verfahren zum Durchführen von einem Rezeptwechsel an einer intermittierend arbeitenden Verpackungsmaschine oder zum Durchführen von einem Rezeptwechsel an einer intermittierend arbeitenden Verpackungslinie, wobei eine Steuereinrichtung in Reaktion auf einen an der Verpackungsmaschine oder an der Verpackungslinie aktivierten Rezeptwechsel von einem ersten Verpackungsrezept auf ein anderes, zweites Verpackungsrezept anhand eines ersten Steuerschritts zur Fertigung eines in Produktionsrichtung zuerst innerhalb einer ersten Arbeitsstation gemäß dem zweiten Verpackungsrezept gebildeten Arbeitstakts mindestens einen dafür an der ersten Arbeitsstation benötigten Prozessparameter automatisch einstellt und/oder einen Bediener auf mindestens eine Umrüstaktion der ersten Arbeitsstation hinweist, wobei die Steuereinrichtung weiter in Reaktion auf den aktivierten Rezeptwechsel anhand eines zweiten Steuerschritts zur Fertigung des in Produktionsrichtung zuerst innerhalb einer zweiten, in Produktionsrichtung von der ersten beabstandeten Arbeitsstation gemäß dem zweiten Verpackungsrezept gebildeten Arbeitstakts mindestens einen dafür an der zweiten Arbeitsstation benötigten Prozessparameter automatisch einstellt und/oder den Bediener auf mindestens eine Umrüstaktion der zweiten Arbeitsstation hinweist.

Erfindungsgemäß führt die Steuereinrichtung nach dem ersten Steuerschritt den zweiten Steuerschritt erst dann durch, wenn ein in Produktionsrichtung dem zuerst gemäß dem zweiten Verpackungsrezept gebildeten Arbeitstakt direkt vorangehender, zuletzt innerhalb der ersten Arbeitsstation gemäß dem ersten Verpackungsrezept gebildeter Arbeitstakt von der ersten Arbeitsstation bis in die von der ersten Arbeitsstation in Produktionsrichtung beabstandet positionierte, zweite Arbeitsstation vorgerückt oder darin zumindest teilweise weiterverarbeitet ist. Daraus resultieren insbesondere ein materialausschussreduzierter, zu einer erhöhten Maschinenauslastung führender Herstellungsprozess sowie eine vereinfachte Maschinenbedienung durch das Bedienpersonal.

Es kann vorgesehen sein, dass die Steuervorrichtung den ersten Steuerschritt durchführt, wenn der direkt in Produktionsrichtung dem zuerst gemäß dem zweiten Verpackungsrezept herzustellenden Arbeitstakt vorausgehende, zuletzt gemäß dem ersten Verpackungsrezept herzustellende Arbeitstakt in die erste Arbeitsstation vorgerückt oder darin zumindest teilweise weiterverarbeitet ist. Vorzugsweise wird der erste Steuerschritt dann durchgeführt, wenn der Rezeptwechsel aktiviert wird und ein gemäß dem ersten Verpackungsrezept herzustellender Arbeitstakt, welcher sich in der ersten Arbeitsstation befindet, vollständig bearbeitet ist, beispielsweise fertiggeformt ist.

Vorzugsweise weist die Steuervorrichtung eine Anzeigevorrichtung auf, mittels welcher auf Basis des ersten Steuerschritts für den Bediener mindestens eine Handlungsanweisung für die Umrüstaktion der ersten Arbeitsstation und/oder mittels welcher auf Basis des zweiten Steuerschritts für den Bediener mindestens eine Handlungsanweisung für die Umrüstaktion der zweiten Arbeitsstation visualisiert werden.

Die Erfindung wird anhand von Ausführungsbeispielen gemäß den folgenden Figuren genauer erläutert. Im Einzelnen zeigen:
Fig. 1 eine schematische Seitenansicht einer Verpackungsmaschine, die als Tiefziehverpackungsmaschine konfiguriert ist,
Fig. 2 eine schematische Seitenansicht einer Verpackungslinie,
Fig. 3 die Verpackungslinie aus Figur 2 in einer Draufsichtdarstellung, und
Fig. 4A bis 4H ein schematisch dargestellter, schrittweise durchgeführter Rezeptwechsel beispielhaft an einer Tiefziehverpackungsmaschine.

Gleiche Komponenten sind in den Figuren durchgängig mit gleichen Bezugszeichen versehen.

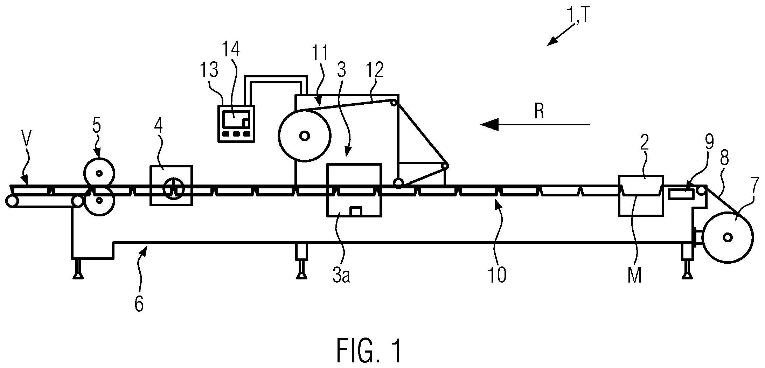

Figur 1 zeigt in einer schematischen Seitenansicht eine intermittierend arbeitende Verpackungsmaschine T, die in Form einer Tiefziehverpackungsmaschine 1 konfiguriert ist. Diese Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Produktionsrichtung R an einem Maschinengestell 6 angeordnet sind. Eingangsseitig befindet sich an dem Maschinengestell 6 eine Zufuhrrolle 7, von der eine Unterfolie 8 abgezogen wird. Ferner weist die Tiefziehverpackungsmaschine 1 eine Transportkette 9 auf, die die Unterfolie 8 ergreift und diese pro Hauptarbeitstakt in der Produktionsrichtung R weitertransportiert.

In der dargestellten Ausführungsform ist die Formstation 2 als eine Tiefziehstation ausgebildet, bei der in die Unterfolie 8 durch Tiefziehen, beispielsweise mittels Druckluft und/oder Vakuum, Mulden geformt werden. Dabei kann die Formstation 2 derart ausgebildet sein, dass in der Richtung senkrecht zur Produktionsrichtung R mehrere Mulden M nebeneinander gebildet werden. In Produktionsrichtung R hinter der Formstation 2 ist eine Einfüllstrecke bzw. ein Einlegebereich 10 vorgesehen, in der die in der Unterfolie 8 geformten Mulden M mit Produkten befüllt werden. Das Befüllen der Mulden M kann von einem Bediener manuell durchgeführt werden.

Die Siegelstation 3 verfügt über eine hermetisch verschließbare Kammer 3a, in der die Atmosphäre in den Mulden M vor dem Versiegeln mit der von einer Oberfolienaufnahme 11 abgegebenen Oberfolie 12 z.B. evakuiert und/oder durch Gasspülen mit einem Austauschgas oder mit einem Gasgemisch ersetzt werden kann.

Die Querschneideeinrichtung 4 kann als Stanze ausgebildet sein, die die Unterfolie 8 und die Oberfolie 12 in einer Richtung quer zur Produktionsrichtung R zwischen benachbarten Mulden M durchtrennt. Dabei arbeitet die Querschneideeinrichtung 4 derart, dass die Unterfolie 8 nicht über die gesamte Breite aufgetrennt wird, sondern zumindest in einem Randbereich nicht durchtrennt wird. Dies ermöglicht einen kontrollierten Weitertransport durch die Transportkette 9.

Die Längsschneideinrichtung 5 kann als eine Messeranordnung ausgebildet sein, mit der die Unterfolie 8 und die Oberfolie 12 zwischen benachbarten Mulden M und am seitlichen Rand der Unterfolie 8 in der Produktionsrichtung R durchtrennt werden, sodass hinter der Längsschneideeinrichtung 5 vereinzelte Verpackungen V vorliegen.

Die Tiefziehverpackungsmaschine 1 verfügt ferner über eine Steuereinrichtung 13. Sie hat die Aufgabe, die in der Tiefziehverpackungsmaschine 1 ablaufenden Prozesse zu steuern und zu überwachen. Eine Anzeigevorrichtung 14 dient zum Visualisieren bzw. Beeinflussen der Prozessabläufe in der Tiefziehverpackungsmaschine 1 für bzw. durch einen Bediener.

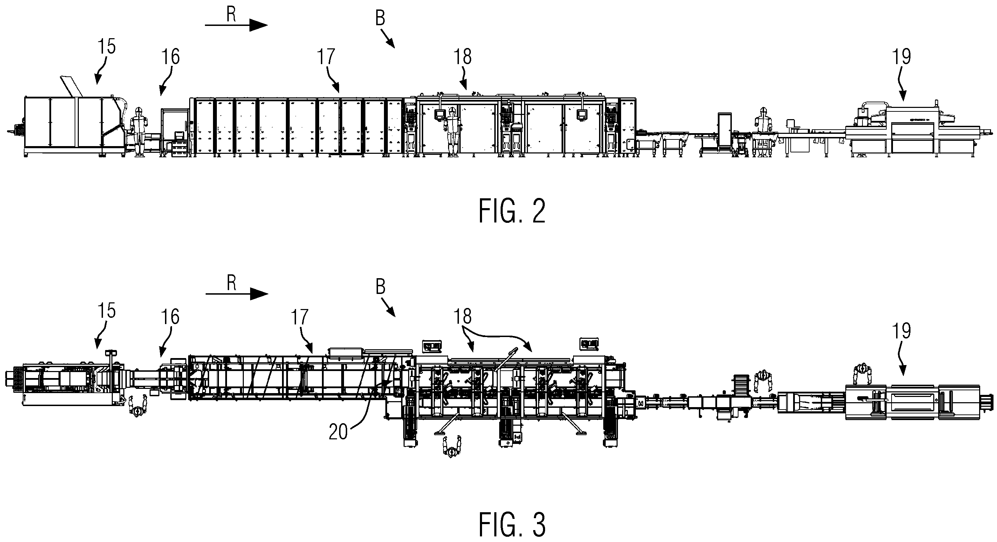

Figur 2 zeigt eine Verpackungslinie B. Die Verpackungslinie B umfasst eine Aufschneidemaschine 15 zum Herstellen einzelner Produkte, ein Wägesystem 16 zum Wiegen der einzelnen Produkte, eine Zuführeinrichtung 17, zwei Beladestationen 18 sowie einen Traysealer 19 zum Verschließen mit produktbeladenen Trays, die in dieser Reihenfolge in Produktionsrichtung R angeordnet sind. Die Aufschneidemaschine 15, in Fachkreisen aus Portionierer genannt, ist dazu ausgebildet, am Eingang der Verpackungslinie B Produkte aufzuschneiden, beispielsweise Rippchen, die jeweils mittels des Wägesystems 16 gewogen, entlang der Zuführeinrichtung 17 in ein bestimmtes Format angeordnet, innerhalb der Beladestationen 18 in Trays verladen und weiter zum Traysealer 19 transportiert werden, um dort in den Trays gasdicht verpackt zu werden.

Figur 3 zeigt die Verpackungslinie B aus Figur 2 aus der Draufsicht. Die nebeneinander angeordneten Beladestationen 18 dienen zum Beladen darin bereitgestellter Trays mit in die Beladestationen 18 zugeführten Produkten. Ferner sind die Beladestationen 18 zum Abtransport der mit produktbeladenen Trays in Richtung des Traysealers 19 ausgebildet. Eingangs der in Produktionsrichtung R zuerst angeordneten Beladestation 18 ist ein Bilderfassungssystem 20, auch Visionsystem genannt, positioniert.

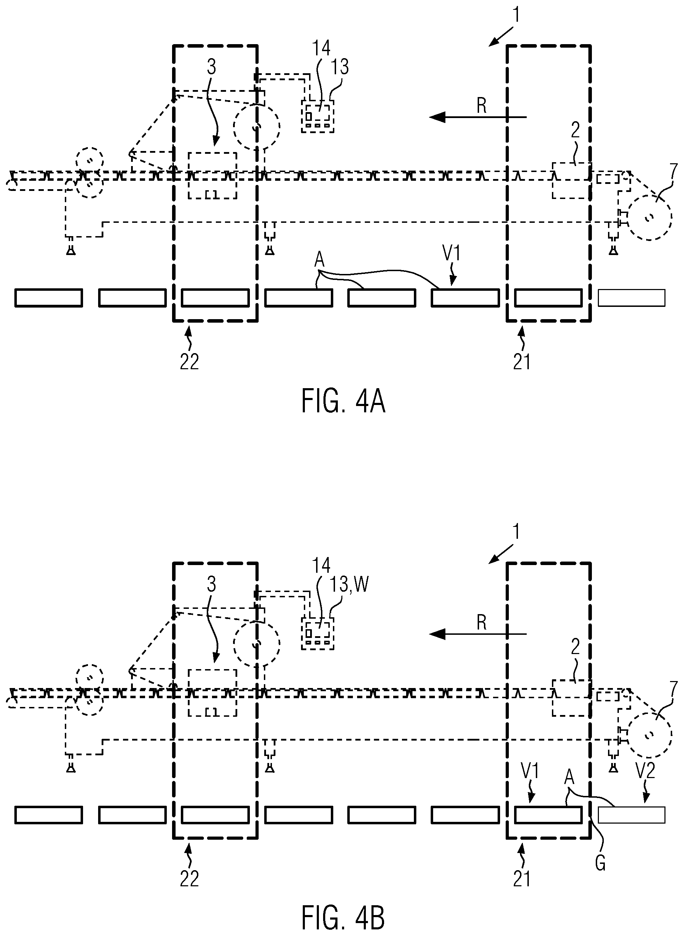

Die Figuren 4A bis 4E zeigen in schematischer Darstellung, wie das erfindungsgemäße Konzept eines Rezeptwechsels W an der Tiefziehverpackungsmaschine 1 ablaufen kann.

Figur 4A zeigt die Tiefziehverpackungsmaschine 1, die für die Herstellung eines ersten Verpackungsrezepts V1 eingestellt ist. Bei der Tiefziehverpackungsmaschine 1 aus Figur 4A liegt die eingangs positionierte Formstation 2 als erste Arbeitsstation 21 vor. Die Siegelstation 3 der Tiefziehverpackungsmaschine 1 liegt in Figur 4A als zweite Arbeitsstation 22 vor, die in Produktionsrichtung R zur ersten Arbeitsstation 21 beabstandet gelagert ist.

In Figur 4A wird gezeigt, dass zwischen der ersten Arbeitsstation 21 und der zweiten Arbeitsstation 22 insgesamt drei Arbeitstakte A liegen. Die einzelnen Arbeitstakte A können beispielsweise gemäß dem ersten Verpackungsrezept V1 jeweils ein Verpackungsformat von 2x2 Verpackungen aufweisen und werden gemäß einem Hauptmaschinenarbeitstakt der Tiefziehverpackungsmaschine 1 schrittweise in Produktionsrichtung R weitergerückt. Für diesen intermittierenden Transport kann die Transportkette 9 eingesetzt werden.

In Figur 4A sind zur Herstellung des ersten Verpackungsrezepts V1 die erste Arbeitsstation 21 und die zweite Arbeitsstation 22 mit entsprechenden Werkzeugkomponenten ausgestattet und/oder mit entsprechenden Prozessparametern eingestellt.

In Figur 4B wird an der Steuereinrichtung 13 der Tiefziehverpackungsmaschine 1 ein Rezeptwechsel W aktiviert. Gemäß dem Rezeptwechsel W soll die Tiefziehverpackungsmaschine 1 vom ersten Verpackungsrezept V1 auf ein anderes, zweites Verpackungsrezept V2 umgestellt werden. Figur 4B zeigt, dass ein unmittelbar vor der ersten Arbeitsstation 21 positionierter Arbeitstakt A als erster Arbeitstakt gemäß dem zweiten Verpackungsrezept V2 hergestellt werden soll. Der diesem vorangehende, innerhalb der ersten Arbeitsstation 21 positionierte Arbeitstakt A wird allerdings noch gemäß dem ersten Verpackungsrezept V1 hergestellt. Zwischen diesen beiden Arbeitstakten A wird somit eine Umstellgrenze G definiert.

Der in Figur 4B aktivierte Rezeptwechsel W kann von einem Bediener an der Steuereinrichtung 13, beispielswiese durch Tastendruck auf einem daran ausgebildeten Display, veranlasst werden.

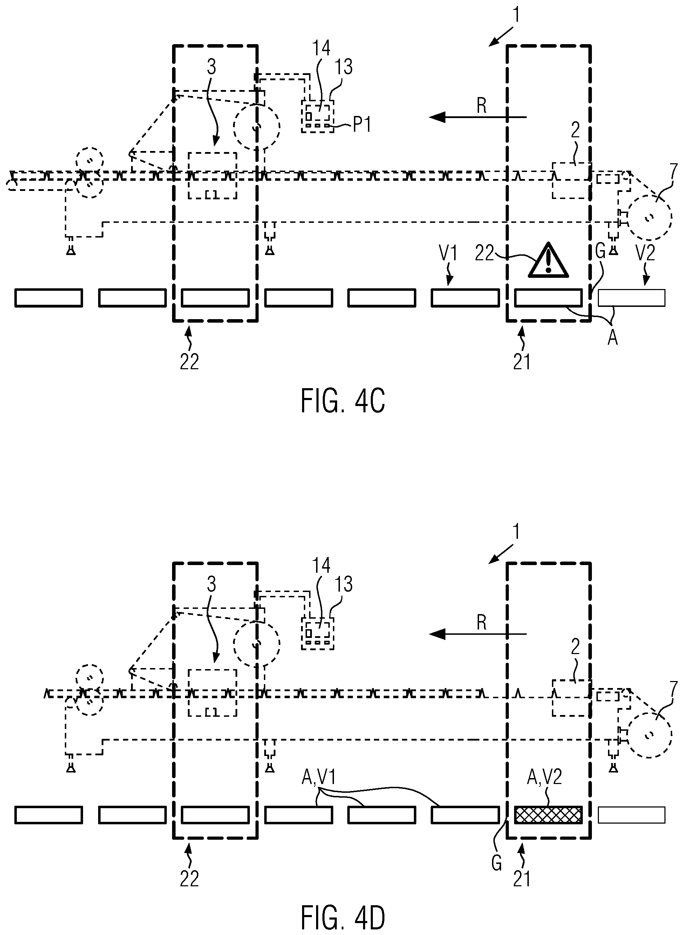

Figur 4C zeigt, dass in Reaktion auf den an der Tiefziehverpackungsmaschine 1 aktivierten Rezeptwechsel W vom ersten Verpackungsformat V1 auf das andere, zweite Verpackungsformat V2 zur Fertigung des in Produktionsrichtung R zuerst innerhalb der ersten Arbeitsstation 21 gemäß dem zweiten Verpackungsformat V2 gebildeten Arbeitstakts A ein dafür an der ersten Arbeitsstation 21 benötigter Prozessparameter P automatisch eingestellt und/oder der Bediener auf mindestens eine Umrüstaktion der ersten Arbeitsstation 21 hingewiesen wird. Dieser Hinweis wird in Figur 4C beispielhaft mit einem Hinweiszeichen 22 dargestellt. Ein dementsprechender Hinweis kann dem Bediener mittels der Anzeigevorrichtung 14 dargestellt werden. Alternativ oder zusätzlich kann ein Prozessparameter P1 für den Betrieb der ersten Arbeitsstation 21 gemäß dem Verpackungsrezept V2 von der Steuereinrichtung 13 geändert werden.

Zur Herstellung von Arbeitstakten A gemäß dem zweiten Verpackungsrezept V2 kann es sein, dass der Verpackungsprozess der Tiefziehverpackungsmaschine 1 für ein vorbestimmtes Umrüst- bzw. Neueinstellungsintervall unterbrochen wird, um von nun an anhand der ersten Arbeitsstation 21 Verpackungen gemäß dem zweiten Verpackungsrezept V2 zu produzieren. Andere an der Tiefziehverpackungsmaschine 1 in Produktionsrichtung R von der ersten Arbeitsstation 21 stromabwärts positionierte Arbeitsstationen, beispielsweise die Siegelstation 3, arbeiten vorerst gemäß dem ersten Verpackungsrezept V1 weiter.

Figur 4D zeigt, dass der Umrüstvorgang und/oder Einstellvorgang an der ersten Arbeitsstation 21 abgeschlossen ist und der in die erste Arbeitsstation 21 nachgerückte Arbeitstakt A gemäß dem zweiten Verpackungsrezept V2 hergestellt wird, sprich die erste Arbeitsstation 21 erstmalig gemäß dem zweiten Verpackungsrezept V2 arbeitet. Die diesem Arbeitstakt A in Produktionsrichtung R vorausgehenden Arbeitstakte A werden dagegen weiterhin gemäß dem ersten Verpackungsrezept V1 hergestellt.

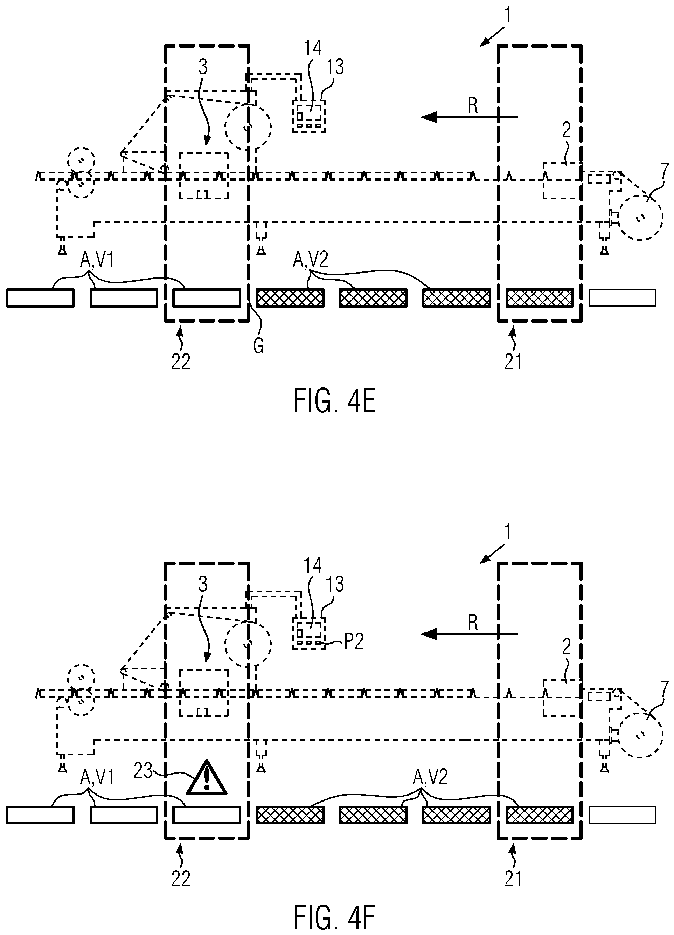

Figur 4E zeigt, dass die Umstellgrenze G bis vor die zweite Arbeitsstation 22 vorgerückt ist und, d.h. der zuerst gemäß dem zweiten Verpackungsrezept V2 innerhalb der ersten Arbeitsstation 21 hergestellte Arbeitstakt A unmittelbar vor der zweiten Arbeitsstation 22 steht und gemäß dem anschließenden Hauptmaschinenarbeitstakt der Tiefziehverpackungsmaschine 1 als nächstes in die zweite Arbeitsstation 22 folgen würde. Die diesem vorausgehenden Arbeitstakte A wurden weiterhin gemäß dem ersten Verpackungsrezept V1 hergestellt.

Figur 4F zeigt, dass in Reaktion auf den an der Tiefziehverpackungsmaschine 1 zuvor in Zusammenhang mit Figur 4B aktivierten Rezeptwechsel W zur Fertigung des in Produktionsrichtung R zuerst innerhalb der zweiten Arbeitsstation 22 gemäß dem zweiten Verpackungsformat V2 gebildeten Arbeitstakts A mindestens ein dafür an der zweiten Arbeitsstation 22 benötigter Prozessparameter P2 automatisch eingestellt und/oder dem Bediener eine Umrüstaktion der zweiten Arbeitsstation 22 angezeigt wird, wobei dies dann geschieht, wenn der in Produktionsrichtung R dem zuerst gemäß dem zweiten Verpackungsrezept V2 gebildeten Arbeitstakt A direkt vorangehende, zuletzt gemäß dem ersten Verpackungsformat V1 gebildete Arbeitstakt A von der ersten Arbeitsstation 21 bis in die zweite Arbeitsstation 22 vorgerückt ist, sprich die Umstellgrenze G unmittelbar vor der zweiten Arbeitsstation 22 steht. Damit ist es möglich, die zweite Arbeitsstation 22 zur Herstellung des zweiten Verpackungsrezepts V2 erst dann neu einzustellen und/oder dafür umzurüsten, wenn der zuerst gemäß dem zweiten Verpackungsrezept V2 innerhalb der ersten Arbeitsstation 21 gebildete Arbeitstakt A um mehrere Hauptmaschinenarbeitstakte nachgerückt und schließlich an der zweiten Arbeitsstation 22 angekommen ist. Dazwischenliegende Arbeitstakte A können dementsprechend gemäß dem ersten Verpackungsrezept V1 fertig hergestellt werden.

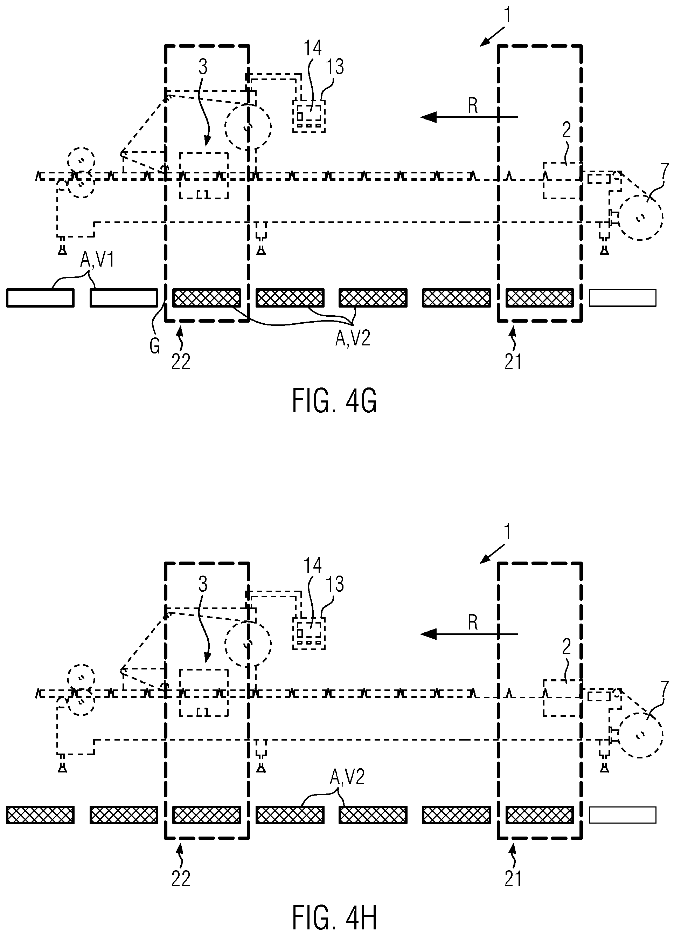

Figur 4G zeigt, dass die zweite Arbeitsstation 22 auf das zweite Verpackungsrezept V2 umgestellt ist und erstmalig innerhalb der zweiten Arbeitsstation 22 gemäß dem zweiten Verpackungsrezept V2 produziert wird. Die dem ersten, gemäß dem zweiten Verpackungsrezept V2 hergestellten Arbeitstakt A vorausgehenden Arbeitstakte A werden in den nachfolgenden Arbeitsstationen, sprich in der Querschneideinrichtung 4 und in der Längsschneideinrichtung 5 weiterhin gemäß dem ersten Verpackungsrezept V1 aufgetrennt.

In vergleichbarer Weise zu den zuvor beschriebenen ersten und zweiten Arbeitsstationen 21, 22 lassen sich die diesen nachfolgenden Arbeitsstationen, beispielsweise die Querschneideeinrichtung 4 und die Längsschneideinrichtung 5 schrittweise, nacheinander für die Herstellung des zweiten Verpackungsrezepts V2 anpassen.

Figur 4H zeigt, dass die Tiefziehverpackungsmaschine 1 vollständig für die Herstellung des zweiten Verpackungsrezepts V2 eingestellt und/oder umgerüstet ist. Die Darstellungen der Figu-ren 4A bis 4H können als Streckenverfolgung mittels der Anzeigevorrichtung 14 dem Bediener angezeigt werden, damit dieser den Fortschritt einer Umstellung der Tiefziehverpackungsmaschine 1 zwischen dem ersten Verpackungsrezept V1 und dem zweiten Verpackungsrezept V2 nachverfolgen kann. Vor allem kann anhand der Streckenverfolgung das Vorrücken der Umstellgrenze G angezeigt werden, sodass für den Bediener ersichtlich ist, wann er welche Arbeitsstation umrüsten muss.

Der erfindungsgemäße Rezeptwechsel W kann an verschiedenen Verpackungsmaschinen oder Verpackungslinien zum Einsatz kommen, insbesondere an intermittierend arbeitenden Verpackungsmaschinen oder Verpackungslinien.

## Patentansprüche

1. Vorrichtung für einen Verpackungsprozess, wobei die Vorrichtung in Form einer schrittweise arbeitenden Verpackungsmaschine (T) vorliegt, oder als eine schrittweise arbeitende Verpackungslinie (B) ausgebildet ist, jeweils umfassend mindestens eine erste Arbeitsstation (21), wenigstens eine von der ersten Arbeitsstation (21) in Produktionsrichtung (R) beabstandet gelagerte zweite Arbeitsstation (22) sowie mindestens eine funktional mit der ersten und der zweiten Arbeitsstation (21,22) verbundene Steuereinrichtung (13), die dazu konfiguriert ist, anhand eines ersten Steuerschritts in Reaktion auf einen an der Verpackungsmaschine (T) oder an der Verpackungslinie (B) aktivierten Rezeptwechsel (W) von einem ersten Verpackungsrezept (V1) auf ein anderes, zweites Verpackungsrezept (V2) zur Fertigung eines in Produktionsrichtung (R) zuerst innerhalb der ersten Arbeitsstation (21) gemäß dem zweiten Verpackungsrezept (V2) gebildeten Arbeitstakts (A) mindestens einen dafür an der ersten Arbeitsstation (21) benötigten Prozessparameter (P1) automatisch einzustellen und/oder einen Bediener auf mindestens eine Umrüstaktion der ersten Arbeitsstation (21) hinzuweisen, wobei die Steuereinrichtung (13) weiter dazu konfiguriert ist, in Reaktion auf den aktivierten Rezeptwechsel (W) anhand eines zweiten Steuerschritts zur Fertigung des in Produktionsrichtung (R) zuerst innerhalb der zweiten Arbeitsstation (22) gemäß dem zweiten Verpackungsrezept (V2) gebildeten Arbeitstakts (A) mindestens einen dafür an der zweiten Arbeitsstation (22) benötigten Prozessparameter (P2) automatisch einzustellen und/oder den Bediener auf mindestens eine Umrüstaktion der zweiten Arbeitsstation (22) hinzuweisen, **dadurch gekennzeichnet, dass** die Steuereinrichtung (13) dazu ausgebildet ist, nach dem ersten Steuerschritt den zweiten Steuerschritt erst dann durchzuführen, wenn ein in Produktionsrichtung (R) dem zuerst gemäß dem zweiten Verpackungsrezept (V2) gebildeten Arbeitstakt (A) direkt vorangehender, zuletzt gemäß dem ersten Verpackungsrezept (V1) innerhalb der ersten Arbeitsstation (21) gebildeter Arbeitstakt (A) von der ersten Arbeitsstation (21) bis in die zweite Arbeitsstation vorgerückt oder darin zumindest teilweise weiterverarbeitet ist.

2. Vorrichtung nach Anspruch 1, **dadurch gekennzeichnet, dass** die Steuervorrichtung (13) dazu ausgebildet ist, den ersten Steuerschritt durchzuführen, wenn der direkt in Produktionsrichtung (R) dem zuerst gemäß dem zweiten Verpackungsrezept (V2) herzustellenden Arbeitstakt (A) vorausgehende, zuletzt gemäß dem ersten Verpackungsrezept (V1) herzustellende Arbeitstakt (A) in die erste Arbeitsstation (21) vorgerückt oder darin zumindest teilweise weiterverarbeitet ist.

3. Vorrichtung nach Anspruch 1 oder 2, **dadurch gekennzeichnet, dass** die Steuereinrichtung (13) eine Anzeigevorrichtung (14) aufweist, mittels welcher auf Basis des ersten Steuerschritts für den Bediener mindestens eine Handlungsanweisung für die Umrüstaktion der ersten Arbeitsstation (21) und/oder mittels welcher auf Basis des zweiten Steuerschritts für den Bediener mindestens eine Handlungsanweisung für die Umrüstaktion der zweiten Arbeitsstation (22) visualisierbar sind.

4. Vorrichtung nach einem der vorangehenden Ansprüche, **dadurch gekennzeichnet, dass** die Steuereinrichtung (13) dazu konfiguriert ist, in Reaktion auf den aktivierten Rezeptwechsel (W) einen zu diesem Zeitpunkt innerhalb der ersten Arbeitsstation (21) angekommenen Arbeitstakt (A) als den zuletzt gemäß dem ersten Verpackungsrezept (V1) herzustellenden Arbeitstakt (A) zu definieren und dessen intermittierenden Vorschub entlang der Verpackungsmaschine (T) oder entlang der Verpackungslinie (B) zu verfolgen und/oder anhand der Anzeigevorrichtung (14) zu visualisieren.

5. Vorrichtung nach einem der vorangehenden Ansprüche, **dadurch gekennzeichnet, dass** der Rezeptwechsel (W) für die Verpackungsmaschine (T) oder für die Verpackungslinie (B) mittels der Steuereinrichtung (13) durch eine daran getätigte Eingabe zur Auswahl eines darin hinterlegten Verpackungsrezepts eines bestimmten Verpackungstypen aktivierbar ist.

6. Vorrichtung nach einem der vorangehenden Ansprüche, **dadurch gekennzeichnet, dass** die Vorrichtung mindestens eine VR-Brille für den Bediener aufweist, mittels welcher mindestens eine Handlungsanweisung für die Umrüstaktion der ersten und/oder der zweiten Arbeitsstation (21, 22) visualisierbar ist.

7. Vorrichtung nach einem der vorangehenden Ansprüche, **dadurch gekennzeichnet, dass** die erste Arbeitsstation (21) als eine Formstation (2) mit mindestens einer Werkzeugkomponente zur Herstellung von Mulden (M) ausgebildet ist und die zweite Arbeitsstation (22) als eine Siegelstation (3) mit mindestens einer Werkzeugkomponente zur Herstellung von versiegelten Mulden (M) ausgebildet ist.

8. Vorrichtung nach Anspruch 7, **dadurch gekennzeichnet, dass** der erste Steuerschritt für die Werkzeugkomponente der Formstation (2) und der zweite Steuerschritt für die Werkzeugkomponente der Siegelstation (3) gilt.

9. Vorrichtung nach einem der vorangehenden Ansprüche, **dadurch gekennzeichnet, dass** die Verpackungsmaschine (T) oder die Verpackungslinie (B) mindestens eine Fördereinrichtung aufweist, die anhand der Steuereinrichtung (13) für einen schrittweisen Transport der innerhalb der ersten Arbeitsstation (21) verarbeiteten Arbeitstakte (A) zu der davon beabstandeten, zweiten Arbeitsstation (22) ansteuerbar ist.

10. Verfahren zum Durchführen von einem Rezeptwechsel (W) an einer intermittierend arbeitenden Verpackungsmaschine (T) oder zum Durchführen von einem Rezeptwechsel (W) an einer intermittierend arbeitenden Verpackungslinie (B), wobei eine Steuereinrichtung (13) in Reaktion auf einen an der Verpackungsmaschine (A) oder an der Verpackungslinie (B) aktivierten Rezeptwechsel (W) von einem ersten Verpackungsrezept (V1) auf ein anderes, zweites Verpackungsrezept (V2) anhand eines ersten Steuerschritts zur Fertigung eines in Produktionsrichtung (R) zuerst innerhalb einer ersten Arbeitsstation (21) gemäß dem zweiten Verpackungsrezept (V2) gebildeten Arbeitstakts (A) mindestens einen dafür an der ersten Arbeitsstation (21) benötigten Prozessparameter (P1) automatisch einstellt und/oder einen Bediener auf mindestens eine Umrüstaktion der ersten Arbeitsstation (21) hinweist, wobei die Steuereinrichtung (13) weiter in Reaktion auf den aktivierten Rezeptwechsel (W) anhand eines zweiten Steuerschritts zur Fertigung des in Produktionsrichtung (R) zuerst innerhalb einer zweiten, in Produktionsrichtung (R) von der ersten beabstandeten Arbeitsstation (22) gemäß dem zweiten Verpackungsrezept (V2) gebildeten Arbeitstakts (A) mindestens einen dafür an der zweiten Arbeitsstation (22) benötigten Prozessparameter (P2) automatisch einstellt und/oder den Bediener auf mindestens eine Umrüstaktion der zweiten Arbeitsstation (22) hinweist, **dadurch gekennzeichnet, dass** die Steuereinrichtung (13) nach dem ersten Steuerschritt den zweiten Steuerschritt erst dann durchführt, wenn ein in Produktionsrichtung (R) dem zuerst gemäß dem zweiten Verpackungsrezept (V2) gebildeten Arbeitstakt (A) direkt vorangehender, zuletzt innerhalb der ersten Arbeitsstation (21) gemäß dem ersten Verpackungsrezept (V1) gebildeter Arbeitstakt (A) von der ersten Arbeitsstation (21) bis in die von der ersten Arbeitsstation (21) in Produktionsrichtung (R) beabstandet positionierte, zweite Arbeitsstation (22) vorgerückt oder darin zumindest teilweise weiterverarbeitet ist.

11. Verfahren nach Anspruch 10, **dadurch gekennzeichnet, dass** die Steuereinrichtung (13) den ersten Steuerschritt durchführt, wenn der direkt in Produktionsrichtung (R) dem zuerst gemäß dem zweiten Verpackungsrezept (V2) herzustellenden Arbeitstakt (A) vorausgehende, zuletzt gemäß dem ersten Verpackungsrezept (V1) herzustellende Arbeitstakt (A) in die erste Arbeitsstation (21) vorgerückt oder darin zumindest teilweise weiterverarbeitet ist.

12. Verfahren nach Anspruch 10 oder 11, **dadurch gekennzeichnet, dass** die Steuereinrichtung (13) eine Anzeigevorrichtung (14) aufweist, mittels welcher auf Basis des ersten Steuerschritts für den Bediener mindestens eine Handlungsanweisung für die Umrüstaktion der ersten Arbeitsstation (21) und/oder mittels welcher auf Basis des zweiten Steuerschritts für den Bediener mindestens eine Handlungsanweisung für die Umrüstaktion der zweiten Arbeitsstation (21) visualisiert werden.

## Claims

1. A device for a packaging process, wherein the device is provided in the form of a step-by-step packaging machine (T), or is configured as a step-by-step packaging line (B), each comprising at least a first workstation (21), at least one second work station (22) mounted at a distance from the first work station (21) in the production direction (R) and at least one control device (13) functionally connected to the first and second work stations (21, 22), which is configured, on the basis of a first control step, in response to a recipe change (W) activated on the packaging machine (T) or on the packaging line (B) from one first packaging recipe (V1) to another, second packaging recipe (V2) for producing a work cycle (A) formed first in the production direction (R) within the first work station (21) in accordance with the second packaging recipe (V2) to set automatically at least one process parameter (P1) required for this at the first workstation (21) and/or to notify an operator of at least one retooling measure of the first work station (21), wherein the control device (13) is further configured, in response to the activated recipe change (W) by means of a second control step for producing the work cycle (A) formed first in the production direction (R) within the second work station (22) in accordance with the second packaging recipe (V2), to automatically set at least one process parameter (P2) required for this at the second work station (22) and/or to notify the operator of at least one retooling measure of the second work station (22), **characterised in that** the control device (13) is configured to perform the second control step after the first control step at the time when a work cycle (A) directly preceding, in the production direction (R), the work cycle (A) first formed according to the second packaging recipe (V2) and last formed according to the first packaging recipe (V1) within the first work station (21) has advanced from the first work station (21) into the second work station or has been at least partially further processed therein.

2. Device according to claim 1, **characterised in that** the control device (13) is configured to carry out the first control step when the work cycle (A) preceding directly in the production direction (R) the work cycle (A) to be produced first in accordance with the second packaging recipe (V2) and to be produced last in accordance with the first packaging recipe (V1) has advanced into the first work station (21) or has been at least partially processed further therein.

3. Device according to claim 1 or 2, **characterised in that** the control device (13) includes a display device (14) by means of which, on the basis of the first control step for the operator, at least one instruction for the retooling measure of the first work station (21) and/or by means of which, on the basis of the second control step for the operator, at least one instruction for the retooling measure of the second work station (22) can be visualized.

4. Device according to any of the preceding claims, **characterised in that** the control device (13) is configured to define, in response to the activated recipe change (W), a work cycle (A) arriving at that moment within the first work station (21) as the last work cycle (A) to be produced according to the first packaging recipe (V1) and to follow its intermittent advance along the packaging machine (T) or along the packaging line (B) and/or to visualize it by means of the display device (14).

5. Device according to any of the preceding claims, **characterised in that** the recipe change (W) for the packaging machine (T) or for the packaging line (B) can be activated by means of the control device (13) by an input made thereto for the selection of a packaging recipe of a specific packaging type stored therein.

6. Device according to any of the preceding claims, **characterised in that** the device is provided with at least one pair of VR goggles for the operator, by means of which at least one instruction for the retooling measure of the first and/or the second work station (21, 22) can be visualised.

7. Device according to any of the preceding claims, **characterised in that** the first working station (21) is configured as a forming station (2) with at least one tool component for producing trays (M) and the second working station (22) is configured as a sealing station (3) with at least one tool component for producing sealed trays (M).

8. Device according to claim 7, **characterised in that** the first control step applies to the tool component of the forming station (2) and the second control step applies to the tool component of the sealing station (3).

9. Device according to any of the preceding claims, **characterised in that** the packaging machine (T) or the packaging line (B) includes at least one transfer device which can be controlled by means of the control device (13) for a step-by-step transport of the work cycles (A) processed within the first work station (21) to the second work station (22) spaced apart from this.

10. A method for carrying out a recipe change (W) on an intermittently operating packaging machine (T) or for carrying out a recipe change (W) on an intermittently operating packaging line (B), wherein a control device (13) sets, in response to a recipe change (W) activated on the packaging machine (T) or on the packaging line (B) from one first packaging recipe (V1) to another, second packaging recipe (V2) for producing a work cycle (A) formed first in the production direction (R) within a first work station (21) in accordance with the second packaging recipe (V2), on the basis of a first control step, automatically at least one process parameter (P1) required for this at the first workstation (21) and/or notifies an operator of at least one retooling measure of the first work station (21), wherein the control device (13) further sets, in response to the activated recipe change (W) by means of a second control step for producing the work cycle (A) formed first in second work station (22), spaced apart from the first work station in production direction (R), in accordance with the second packaging recipe (V2), at least one process parameter (P2) required for this at the second work station (22) and/or notifies the operator of at least one retooling measure of the second work station (22), **characterised in that** the control device (13) performs the second control step after the first control step at the time when a work cycle (A) directly preceding, in the production direction (R), the work cycle (A) first formed according to the second packaging recipe (V2) and last formed according to the first packaging recipe (21) within the first work station (V1) has advanced from the first work station (21) into the second work station (22), positioned spaced apart from the first work station (21) in production direction (R), or has been at least partially further processed therein.

11. Method according to claim 10 **characterised in that** the control device (13) carries out the first control step when the work cycle (A) preceding directly in the production direction (R) the work cycle (A) to be produced first in accordance with the second packaging recipe (V2) and to be produced last in accordance with the first packaging recipe (V1) has advanced into the first work station (21) or has been at least partially processed further therein.

12. Method according to claim 10 or 11, **characterised in that** the control device (13) includes a display device (14) by means of which, on the basis of the first control step for the operator, at least one instruction for the retooling measure of the first work station (21) and/or by means of which, on the basis of the second control step for the operator, at least one instruction for the retooling measure of the second work station (21) is visualized.

## Revendications

1. Dispositif pour un processus d'emballage, dans lequel le dispositif se présente sous la forme d'une machine d'emballage pas à pas (T) ou est conçu sous la forme d'une ligne d'emballage pas à pas (B), comprenant respectivement au moins un premier poste de travail (21), au moins un deuxième poste de travail (22) espacé du premier poste de travail (21) dans la direction de production (R), ainsi qu'au moins un dispositif de commande (13) fonctionnellement connecté aux premier et deuxième postes de travail (21, 22) qui est configuré, via une première étape de commande en réponse à un changement de recette (W) d'une première recette d'emballage (V1) à une autre deuxième recette d'emballage (V2), activé sur la machine d'emballage (T) ou sur la ligne d'emballage (B), pour la réalisation d'un cycle de travail (A) effectué en premier dans la direction de production (R) dans le premier poste de travail (21) selon la deuxième recette d'emballage (V2), pour régler automatiquement au moins un paramètre de processus (P1) requis à cet effet sur le premier poste de travail (21) et/ou pour suggérer à un opérateur au moins une action de reconfiguration du premier poste de travail (21), dans lequel le dispositif de commande (13) est en outre configuré, en réponse au changement de recette (W) activé, via une deuxième étape de commande pour la réalisation du cycle de travail (A) effectué en premier dans la direction de production (R) dans le deuxième poste de travail (22) selon la deuxième recette d'emballage (V2), pour régler automatiquement au moins un paramètre de processus (P2) requis à cet effet sur le deuxième poste de travail (22) et/ou pour suggérer à l'opérateur au moins une action de reconfiguration du deuxième poste de travail (22), **caractérisé en ce que** le dispositif de commande (13) est conçu pour exécuter la deuxième étape de commande après la première étape de commande seulement quand un cycle de travail (A) qui précède directement dans la direction de production (R) le cycle de travail (A) effectué en premier selon la deuxième recette d'emballage (V2) et effectué en dernier dans le premier poste de travail (21) selon la première recette d'emballage (V1) a progressé du premier poste de travail (21) au deuxième poste de travail ou y a été au moins partiellement traité.

2. Dispositif selon la revendication 1, **caractérisé en ce que** le dispositif de commande (13) est conçu pour exécuter la première étape de commande quand le cycle de travail (A) qui précède directement dans la direction de production (R) le cycle de travail (A) à exécuter en premier selon la deuxième recette d'emballage (V2) et à exécuter en dernier selon la première recette d'emballage (V1) a progressé dans le premier poste de travail (21) ou y a été au moins partiellement traité.

3. Dispositif selon la revendication 1 ou 2, **caractérisé en ce que** le dispositif de commande (13) comporte un dispositif d'affichage (14) au moyen duquel, sur la base de la première étape de commande, au moins une instruction fonctionnelle pour l'action de reconfiguration du premier poste de travail (21) peut être visualisée pour l'opérateur, et/ou au moyen duquel, sur la base de la deuxième étape de commande, au moins une instruction fonctionnelle pour l'action de reconfiguration du deuxième poste de travail (22) peut être visualisée pour l'opérateur.

4. Dispositif selon l'une des revendications précédentes, **caractérisé en ce que** le dispositif de commande (13) est configuré, en réponse au changement de recette (W) activé, pour définir un cycle de travail (A) parvenu à cet instant dans le premier poste de travail (21) comme cycle de travail (A) à exécuter en dernier selon la première recette d'emballage (V1), et pour poursuivre son alimentation intermittente le long de la machine d'emballage (T) ou le long de la ligne d'emballage (B) et/ou pour la visualiser au moyen du dispositif d'affichage (14).

5. Dispositif selon l'une des revendications précédentes, **caractérisé en ce que** le changement de recette (W) pour la machine d'emballage (T) ou pour la ligne d'emballage (B) peut être activé au moyen du dispositif de commande (13) par une entrée effectuée sur celui-ci pour sélectionner une recette d'emballage d'un type d'emballage déterminé qui y est stockée.

6. Dispositif selon l'une des revendications précédentes, **caractérisé en ce que** le dispositif comporte au moins un casque VR pour l'opérateur, au moyen duquel au moins une instruction fonctionnelle pour l'action de reconfiguration du premier et/ou du deuxième poste de travail (21, 22) peut être visualisée.

7. Dispositif selon l'une des revendications précédentes, **caractérisé en ce que** le premier poste de travail (21) est conçu comme un poste de formage (2) avec au moins un composant d'outil pour la fabrication de barquettes (M), et **en ce que** le deuxième poste de travail (22) est conçu comme un poste de scellage (3) avec au moins un composant d'outil pour la fabrication de barquettes scellées (M).

8. Dispositif selon la revendication 7, **caractérisé en ce que** la première étape de commande s'applique au composant d'outil du poste de formage (2) et la deuxième étape de commande s'applique au composant d'outil du poste de scellage (3).

9. Dispositif selon l'une des revendications précédentes, **caractérisé en ce que** la machine d'emballage (T) ou la ligne d'emballage (B) comporte au moins un dispositif de convoyage qui peut être commandé au moyen du dispositif de commande (13) pour un transport pas à pas des cycles de travail (A) réalisés dans le premier poste de travail (21) vers le deuxième poste de travail (22) espacé du premier.

10. Procédé de réalisation d'un changement de recette (W) sur une machine d'emballage (T) fonctionnant par intermittence ou de réalisation d'un changement de recette (W) sur une ligne d'emballage (B) fonctionnant par intermittence, dans lequel un dispositif de commande (13), en réponse à un changement de recette (W) activé sur la machine d'emballage (A) ou sur la ligne d'emballage (B) d'une première recette d'emballage (V1) à une autre, deuxième recette d'emballage (V2) via une première étape de commande pour la réalisation d'un cycle de travail (A) effectué en premier dans la direction de production (R) dans un premier poste de travail (21) selon la deuxième recette d'emballage (V2), définit automatiquement au moins un paramètre de processus (P1) requis à cet effet au premier poste de travail (21) et/ou informe un opérateur d'au moins une action de reconfiguration du premier poste de travail (21), dans lequel le dispositif de commande (13), en réponse au changement de recette (W) activé, définit en outre automatiquement au moins un paramètre de processus (P2) requis à cet effet au deuxième poste de travail (22) au moyen d'une deuxième étape de commande pour la réalisation du cycle de travail (A) effectué en premier dans la direction de production (R) dans un deuxième poste de travail (22) espacé du premier, conformément à la deuxième recette d'emballage (V2), et/ou alerte l'opérateur d'au moins une action de reconfiguration du deuxième poste de travail (22), **caractérisé en ce que** le dispositif de commande (13) exécute la deuxième étape de commande après la première étape de commande seulement quand un cycle de travail (A) qui précède directement dans la direction de production (R) le cycle de travail (A) effectué en premier selon la deuxième recette d'emballage (V2) et effectué en dernier dans le premier poste de travail (21) selon la première recette d'emballage (V1) a progressé du premier poste de travail (21) au deuxième poste de travail (22) espacé du premier poste de travail (21) dans la direction de production (R) ou y a été au moins partiellement traité.

11. Procédé selon la revendication 10, **caractérisé en ce que** le dispositif de commande (13) exécute la première étape de commande quand le cycle de travail (A) qui précède directement dans la direction de production (R) le cycle de travail (A) à exécuter en premier selon la deuxième recette d'emballage (V2) et à exécuter en dernier selon la première recette d'emballage (V1) a progressé dans le premier poste de travail (21) ou y a été au moins partiellement traité.

12. Procédé selon la revendication 10 ou 11, **caractérisé en ce que** le dispositif de commande (13) comporte un dispositif d'affichage (14) au moyen duquel, sur la base de la première étape de commande, au moins une instruction fonctionnelle pour l'action de reconfiguration du premier poste de travail (21) est visualisée pour l'opérateur, et/ou au moyen duquel, sur la base de la deuxième étape de commande, au moins une instruction fonctionnelle pour l'action de reconfiguration du deuxième poste de travail (21) est visualisée pour l'opérateur.
